Europäisches Patentamt

European Patent Office

Office européen des brevets

(19)

(11) Veröffentlichungsnummer: **0 380 998 B1**

(12) **EUROPÄISCHE PATENTSCHRIFT**

(45) Veröffentlichungstag der Patentschrift: **01.03.95**

(51) Int. Cl.⁶: **C01B 33/32**

(21) Anmeldenummer: **90101197.3**

(22) Anmeldetag: **22.01.90**

Verbunden mit 90901791.5/0456654
(europäische
Anmeldenummer/Veröffentlichungsnummer)
durch Entscheidung vom 11.10.93.

(54) **Verfahren zur hydrothermalen Herstellung von Kaliumsilikatlösungen mit hohem SiO2:K20-Molverhältnis.**

(30) Priorität: **31.01.89 DE 3902753**

(43) Veröffentlichungstag der Anmeldung:
**08.08.90 Patentblatt 90/32**

(45) Bekanntmachung des Hinweises auf die
Patenterteilung:
**01.03.95 Patentblatt 95/09**

(84) Benannte Vertragsstaaten:
**AT BE CH DE ES FR GB GR IT LI LU NL SE**

(56) Entgegenhaltungen:
**EP-A- 0 164 073
FR-A- 2 525 204
FR-A- 2 541 667
GB-A- 2 078 701**

**PATENT ABSTRACTS OF JAPAN Band 6, Nr. 202 (C-129) (1080), 13. Oktober 1982; & JP - A - 57 111 232 (DOUKAI KAGAKU KOGYO K.K.) 07.07.1982**

(73) Patentinhaber: **Henkel Kommanditgesellschaft auf Aktien**

**D-40191 Düsseldorf (DE)**

(72) Erfinder: **Novotny, Rudolf, Dr.
Am Rittersberg 14
D-4000 Düsseldorf 13 (DE)**
Erfinder: **Hoff, Alfred, Dr.
Wacholderstrasse 18
D-4130 Moers-Schwafheim (DE)**
Erfinder: **Schürtz, Jost, Dr.
Hintenmeiswinkeler Weg 14
D-5650 Solingen 1 (DE)**

**Beschreibung**

Die vorliegende Erfindung betrifft ein Verfahren zur hydrothermalen Herstellung von Kaliumsilikatlösungen mit hohem $SiO_2:K_2O$-Molverhältnis durch Umsetzung eines kristallinen Siliciumdioxids mit wäßrigen Kaliumhydroxidlösungen.

Eine allgemeine Übersicht über die Herstellung von wäßrigen Kaliumsilikatlösungen geben die Monographien von Winnacker und Küchler, Chemische Technologie, Band 3, Anorganische Technologie II, 4. Auflage, 1983, S. 54-63 und Ullmanns Encyklopädie der technischen Chemie, Band 21, 4. Auflage, 1982, S. 409-412.

Von den unter der Bezeichnung "Wasserglas" bekannten Alkalimetallsilikaten finden für technische Zwecke unter anderem Kaliumsilikatlösungen - allgemein als Kaliwasserglas bezeichnet - Verwendung. Derartige Kaliwassergläser weisen überwiegen einen Feststoffgehalt von etwa 28 bis 55 Gew.-% sowie ein Molverhältnis Siliciumdioxid zu Kaliumoxid von 2,0 bis 4,2 : 1 auf. Die Herstellung von Kaliwassergläsern im technischen Maßstab erfolgt im allgemeinen durch Zusammenschmelzen von Quarzsand und Pottasche in hierfür geeigneten Öfen bei Temperaturen im Bereich von 1400 bis 1500 °C. Die beim Abkühlen erstarrende Schmelze, das Festglas, wird anschließend in einem weiteren Verfahrensschritt unter Verwendung von Druck und erhöhten Temperaturen in Wasser gelöst und die erhaltene Lösung - je nach Qualitätsanforderung - gegebenenfalls filtriert.

Dieses Hochtemperatur-Schmelzverfahren ist jedoch sowohl apparativ als auch hinsichtlich der erforderlichen Energiemengen sehr aufwendig und führt weiterhin zu nicht unerheblichen Emissionen, wie Staub, Stickoxiden und Schwefeloxiden.

Neben diesem in der Technik hauptsächlich angewandten Hochtemperatur-Schmelzverfahren sind ferner hydrothermale Verfahren zur Herstellung wäßriger Kaliumsilikatlösungen bekannt, die in einer Reihe von Patentanmeldungen beschrieben werden.

Diese Verfahren gehen zum einen von amorphem Siliciumdioxid aus, im wesentlichen also von Flugstäuben und natürlich vorkommenden amorphen Siliciumdioxid-Modifikationen.

Die hierbei erhaltenen Verfahrensprodukte sind durch die üblichen Verunreinigungen der Flugstäube und der natürlichen amorphen Siliciumdioxidverbindungen, die als Eingangsstoffe eingesetzt werden, nur von geringer Qualität und können somit nur eingeschränkt für technische Produkte verwendet werden.

Die DE-AS 28 26 432 betrifft ein Verfahren zur Herstellung von Wasserglaslösungen durch Umsetzung von Flugstäuben, die bei Gewinnung von Silicium bzw. von Ferrosilicium-Legierungen anfallen, mit wäßrigen Alkalimetallhydroxidlösungen bei erhöhten Temperaturen und anschließendem Filtrieren der enthaltenen Lösungen, das dadurch gekennzeichnet ist, daß man Flugstaub mit einer 6- bis 15-Gew.-%igen wäßrigen Alkalimetallhydroxidlösung bei Temperaturen von 120 °C bis 190 °C und einem Druck von 2,9 bis 18,6 bar im Autoklaven behandelt, wobei das Gewichtsverhältnis von Alkalimetallhydroxidlösung zu festem Flugstaub 2 : 1 bis 5 : 1 beträgt. Das hierbei unter anderem gewonnene Kaliwasserglas weist ein Molverhältnis $SiO_2$ : $K_2O$ von 3,76 : 1 auf. Die als Ausgangsstoffe eingesetzten Flugstäube weisen einen Siliciumgehalt von 89 bis 98 Gew.-% auf, der gemäß den Ausführungsbeispielen stets bei 90 Gew-% liegt; der Rest besteht aus Verunreinigungen.

Die DE-OS 26 09 831 betrifft ein Verfahren zur Aufbereitung von Siliciumdioxid enthaltenden umweltbelastenden Abfallflugstäuben aus der Siliciummetall- und Siliciumlegierungs-Herstellung zu Kieselsäuren oder Silikaten, das dadurch gekennzeichnet ist, daß die folgenden Verfahrensschritte I bis III kombiniert werden:

I Auflösen der Flugstäube in Alkalihydroxidlösungen unter Bildung von Alkalisilikatlösungen;

II Reinigung der Alkalisilikatlösungen von organischen Bestandteilen durch Behandlung mit Aktivkohle und/oder Oxidationsmitteln und Abtrennung des nicht aufschließbaren Rückstandes von der Lösung;

III Umsetzung der Alkalisilikatlösungen mit anorganischen oder organischen Säuren und/oder deren Salzen zwecks weiterer Reinigung.

Die auf diese Weise erhaltenen Alkalisilikatlösungen weisen im allgemeinen ein Molverhältnis $SiO_2$ : $Me_2O$ im Bereich von 3,3 bis 5,0 : 1 auf.

Die DE-OS 26 19 604 betrifft ein Verfahren zur Herstellung von flüssigem Wasserglas aus amorphem Siliciumdioxid und Alkalihydroxid, das dadurch gekennzeichnet ist, daß Siliciumdioxidstaub in Form von Flugasche, die von den Abgasen von Ferrolegierungs-Industrien und anderen mit Siliciumöfen arbeitenden Industrien abgeschieden worden ist, Alkalihydroxid und Wasser in einem bestimmten Gewichtsverhältnis gemischt werden und daraufhin unter Umrühren auf eine Temperatur zwischen 75 und 100 °C gebracht werden, wonach die erzielte Flüssigkeit abgekühlt wird. Die als Ausgangsstoff für diese Wasserglasherstellung benutzten Siliciumdioxidstäube weisen im allgemeinen einen Siliciumdioxidgehalt von 94 bis 98 Gew.-% auf; der Rest besteht aus Verunreinigungen. Das erhaltene Kaliwasserglas weist ein Molverhältnis $SiO_2/K_2O$ von 3,58 : 1 auf.

Wie die vorstehenden Ausführungen zeigen, liefern die in der Patentliteratur beschriebenen, aus amorphem Siliciumdioxid erhaltenen Wassergläser stets nur Verfahrensprodukte mit minderen Eigenschaften, die einer weiteren Reinigung unterzogen werden müssen.

Der im folgenden beschriebene Stand der Technik betrifft Verfahren zur hydrothermalen Herstellung von Kaliumsilikatlösungen aus kristallinem Siliciumdioxid, also Sand, und Kalilauge, die nach den Verfahren des Standes der Technik allerdings nur bis zu einem $SiO_2 : K_2O$-Molverhältnis von bis zu 2,75 : 1 umgesetzt werden können.

Die DE-OS 33 13 814 betrifft unter anderem ein Verfahren zur Herstellung einer klaren Lösung eines Kaliumsilikats, dessen Molverhältnis Siliciumdioxid : Kaliumoxid gleich 2,75 : 1 ist, durch Aufschluß von kristallinem Siliciumdioxid einer mittleren Korngröße zwischen 0,1 und 2 mm, bei dem eine wäßrige Lösung von Kaliumhydroxid ein Bett aus Siliciumdioxid durchläuft, das in einem senkrechten rohrförmigen Reaktor ohne mechanische Bewegung ausgebildet und von oben nach unten mit Siliciumdioxid und der wäßrigen Lösung des Kaliumhydroxids gespeist wird.

Die belgische Patentschrift 649 739 betrifft ein Verfahren und ein Gerät zur Herstellung von klaren Natriumsilikat-Laugen durch Auflösung eines kieselsäurehaltigen Materials bei hoher Temperatur und unter Druck in wäßriger Ätznatronlauge, das dadurch gekennzeichnet ist, daß das Produkt von dem überschüssigen kieselsäurehaltigen Material und/oder von den unlöslichen verunreinigten Stoffen mittels Filtrierelementen getrennt wird, die in der Nähe des Reaktorbodens angebracht sind, wobei die besagte Filtration vorteilhaft unter den Temperatur- und Druckbedingungen erfolgt, die den Reaktionsbedingungen sehr ähnlich sind. Auf diese Weise sollen auch wäßrige Kaliumsilikatlösungen erhalten werden.

Daneben ist aus JP 59/182 225 bekannt, Silikatreiche Natriumsilikat-Lösungen durch hydrothermalen Aufschluß von durch Temperaturbehandlung modifizierten quarzsand herzüstellen.

Derartige hydrothermale Verfahren zur Herstellung von Kaliwassergläsern aus Sand und Kalilauge werden auch in der bereits vorstehend zitierten Monographie von Winnacker, Küchler erörtert. Hier heißt es (Seiten 61 und 62), daß sich Kakiwassergläser im Hydrothermalverfahren jedoch nicht herstellen lassen, da beim Aufschluß größere Mengen schwerlösliches $(KHSi_2O_5)_x$ entstehen, die auch durch nachträgliches Erhitzen nicht in Lösung gehen.

Aufgrund der vorstehend zitierten Literatur bestand somit ein direktes Vorurteil hinsichtlich der Gewinnung von Kaliumsilikat-Lösungen mit höherem $SiO_2/K_2O$-Molverhältnis im Hydrothermalverfahren aus Sand, d.h. aus kristallinem $SiO_2$, und Kalilauge.

Der vorliegenden Erfindung liegt demgegenüber die Aufgabe zugrunde, ein Verfahren zur hydrothermalen Herstellung von Kaliumsilikatlösungen durch Umsetzung eines kristallinen Siliciumdioxid mit wäßriger Kaliumhydroxidlösung bereitzustellen, bei welchem Kaliumsilikat-Lösungen mit Molverhältnissen $SiO_2/K_2O$ von mehr als 2,75 : 1 erzielt werden.

Die erfindungsgemäße Aufgabe wird durch den Einsatz eines speziell getemperten Quarzes erreicht, der unter speziellen Reaktionsbedingungen mit Kaliumhydroxidlösungen umgesetzt wird.

Die vorliegende Erfindung betrifft somit ein Verfahren zur hydrothermalen Herstellung von Kaliumsilikatlösungen mit hohem $SiO_2 : K_2O$-Molverhältnis durch Umsetzung eines kristallinen Siliciumdioxids mit wäßriger Kaliumhydroxidlösung, das dadurch gekennzeichnet ist,

daß man als kristallines Siliciumdioxid einen bei Temperaturen im Bereich von über 1100 °C bis zum Schmelzpunkt getemperten Quarz einsetzt, und

diesen getemperten Quarz mit wäßriger Kaliumhydroxidlösung in einem Konzentrationsbereich von 10 bis 40 Gew.-% bei Temperaturen von 150 bis 300 °C und den diesen Temperaturen entsprechenden Drücken von gesättigtem Wasserdampf in einem Druckreaktor umsetzt.

Das erfindungsgemäße Verfahren ist durch seine einstufige Verfahrensführung technisch einfacher zu handhaben und somit kostengünstiger als die technisch aufwendigen, große Energiemengen erfordernden und die Umwelt stark belastenden Verfahren des Standes der Technik, also die Hochtemperatur-Schmelzverfahren mit anschließendem Lösungsschritt.

Gegenüber den Hydrothermalverfahren des Standes der Technik besitzt das erfindungsgemäße Verfahren den Vorteil, daß durch den Einsatz des erfindungsgemäß speziell getemperten Quarzes auch die technisch wichtigen Kaliumsilikatlösungen mit einem Molverhältnis an $SiO_2 : K_2O$ von mehr von als 2,75 : 1 erhalten werden, was unter Verwendung von nicht getempertem Quarz als $SiO_2$-Komponente nicht möglich ist.

Weiterhin wurde überraschenderweise gefunden, daß aus auf diese Weise getempertem Quarz, vorzugsweise einem auf diese Weise gebildeten Cristobalit, im Rahmen einer Hydrothermalsynthese unter den vorstehend angegebenen Bedingungen schon bei kurzen Reaktionszeiten die direkte, einstufige Herstellung von wäßrigen Kaliumsilikatlösungen möglich ist, die ein Molverhältnis $SiO_2 : K_2O$ von mehr als 2,75 : 1 aufweisen.

Auch bei kurzen Reaktionszeiten läßt sich bei Anwendung des erfindungsgemäßen Verfahrens ein hoher Umsetzungsgrad der eingesetzten Reaktionskomponenten erzielen. Der Einsatz einer leicht löslichen kristallinen Siliciumdioxid-Modifikation erlaubt es, Kaliumsilikatlösungen mit einem hohen Siliciumdioxid/Kaliumoxid-Molverhältnis herzustellen, wobei dies in hohen Raum/Zeitausbeuten bei minimalem Energieverbrauch geschieht.

Vorzugsweise besitzt die so erhaltene Kaliumsilikatlösung ein $SiO_2$ : $K_2O$-Molverhältnis von mehr als 2,75 bis 4,2 : 1, besonders bevorzugt von 2,8 bis 4,2 : 1 und insbesondere von 3,1 bis 4,0 : 1.

Nach einer bevorzugten Ausführungsform der vorliegenden Erfindung erhält man die wäßrige Kaliumsilikatlösung, indem man als kristallines Siliciumdioxid einen bei Temperaturen von 1200 bis 1700 °C unter Zusatz katalytischer Mengen an Alkali getemperten Quarz einsetzt, welcher sich unter diesen Temperbedingungen im wesentlichen in Cristobalit umwandelt, und daß man den so getemperten Quarz mit wäßriger Kaliumhydroxidlösung in einem Konzentrationsbereich von 15 bis 30 Gew.-%, vorzugsweise 15 bis 25 Gew.-%, bei Temperaturen von 200 bis 230 °C und den diesen Temperaturen entsprechenden Drücken von gesättigtem Wasserdampf in einem geschlossenen Druckreaktor umsetzt.

Cristobalit ist, wie Quarz, eine Kristallmodifikation des Siliciumdioxid. Dieser wird praktisch ausschließlich synthetisch durch Calcinierung von Quarz hergestellt, indem man Quarzsand bei Temperaturen von ca. 1500 °C unter Zusatz von Katalysatoren (Alkaliverbindungen) kontinuierlich umwandelt. Bezüglich näherer Informationen zu Cristobalit wird auf Ullmanns Encyklopädie der technischen Chemie, Band 21, 4. Auflage, 1982, S. 439-442 verwiesen.

Im Sinne der Erfindung ist es daher besonders bevorzugt, als kristallines Siliciumdioxid einen bei Temperaturen im Bereich von 1300 °C bis 1600 °C unter Zusatz katalytischer Mengen an Alkali getemperten Quarz einzusetzen, der sich unter diesen Bedingungen im wesentlichen in Cristobalit umwandelt. Besonders vorteilhaft ist es ferner, ein frisch getempertes, noch warmes Cristobalit-Material für das erfindungsgemäße Verfahren zu verwenden.

Nach einer weiteren bevorzugten Ausführungsform des erfindungsgemäßen Verfahrens führt man die Umsetzung im Reaktor durch, indem man einen Überschuß an getempertem Quarz von bis zu 100 Mol-%, vorzugsweise 2 bis 30 Mol-%, bezogen auf die gewünschten Soll-$SiO_2$ : $K_2O$-Molverhältnisse in der Kaliumsilikatlösung, einsetzt. Generell läßt sich die Umsetzung auch mit höheren Überschüssen als 100 Mol-% an getempertem Quarz durchführen; dies ist jedoch im allgemeinen technisch nicht sinnvoll.

Zur Durchführung des erfindungsgemäßen Verfahrens können generell alle auch für die Hydrothermalsynthese von Natronwasserglas gebräuchlichen Reaktoren Verwendung finden. Hierzu gehören z.B. rotierende Löser, stehende Löseranordnungen, Reaktoren mit Rührwerk, Strahlschlaufenreaktoren, Rohrreaktoren und im Prinzip alle Reaktoren, die zur Umsetzung von Feststoffen mit Flüssigkeiten unter Druck geeignet sind. Derartige Reaktoren sind beispielsweise in der DE-OS 30 02 857, DE-OS 34 21 158, DE-AS 28 26 432, BE-PS 649 739, DE-OS 33 13 814 und der DE-PS 968 034 ausführlich beschrieben.

Die in der erfindungsgemäßen Weise hergestellten Kaliumsilikat-Lösungen (Kaliwasserglas-Lösungen) können für alle üblichen Verwendungszwecke eingesetzt werden, die dem Fachmann bekannt sind und in der einschlägigen Literatur beschrieben werden, beispielsweise als Klebstoffe, als Bindemittel in Farben, Gießereihilfsstoffen, Katalysatorträgern, Schweißelektrodermassen, als Komponente in Wasch- und Reinigungsmitteln, sowie als Bestandteil für feuerfeste Materialien.

Die Erfindung wird im folgenden durch Beispiele näher erläutert. Die Beispiele erfolgten im Laboratoriums-Maßstab und im technischen Maßstab. Als getemperter Quarz wurde in den Ausführungsbeipielen ein durch Tempern bei 1300 bis 1600 °C und Alkalikatalyse erhaltener Cristobalit verwendet.

Für die Laboratoriumsversuche wurde ein zylindrischer Autoklav eingesetzt, der von außen durch einen Wärmeträger auf Reaktionstemperatur aufgeheizt wurde. Die Ergebnisse dieser Beispiele sind in der nachfolgenden Tabelle zusammengefaßt.

Als Reaktor für die Durchführung der Versuche im technischen Maßstab diente ein waagerecht angeordneter zylindrischer Druckbehälter aus Stahl mit einer Nickelauskleidung mit einem Leervolumen von ca. 24 m³. Der Druckbehälter drehte sich mit einer Drehzahl von 6 UpM um eine horizontale Achse. Die Beheizung erfolgte mit Dampf von 20 bar über eine Öffnung in der Achse und ein angesetztes Rohr mit einer wirkungsvollen Verteilung direkt in den Reaktionsbehälter hinein.

Das für die Beispiele verwendete kristalline $SiO_2$, der aus getempertem Quarz erhaltene Cristobalit, enthielt > 99,0 Gew.-% $SiO_2$.

Die für den Prozeß benötigte wäßrige Kaliumhydroxidlösung (Kalilauge) wurde über eine Venturi-Düse oberhalb des Kalilauge-Vorratsbehälters mit Brüden aus der Vorcharge auf etwa 103 °C aufgeheizt.

Die Stoffmengen (Cristobalit/Kalilauge) wurden über Wägevorrichtungen erfaßt. Die Rohstoffe wurden in den Reaktor eingefüllt, dieser dann verschlossen und in Rotation versetzt. Durch direktes Einleiten von Dampf wurde das Reaktionsgemisch auf die Reaktionstemperatur von ca. 215 °C aufgeheizt und bei dieser Temperatur belassen. Nach einer Reaktionszeit von 30 bis 120 min bei dieser Temperatur wurde der Reaktor zum Stillstand gebracht und das Reaktionsgemisch über eine angeflanschte Rohrleitung mittels seines Eigendruckes in einen Ausblasebehälter überführt. Auf diesem Wege wurde das Reaktionsgemisch dann über einen Zyclonabscheider in Brüden und etwa 105 °C heiße Wasserglaslösung getrennt. Die Brüden wurden von einem Strahlapparat angesaugt und zur Vorwärmung der Mischlauge des nächsten Ansatzes in einer Venturi-Düse bis zur Grenze der Siedetemperatur der Lauge von etwa 103 °C verwendet.

Die weitere Aufarbeitung der ca. 100 °C heißen Wasserglaslösung wurde entweder über einen Sedimentationsbehälter zur groben Abtrennung von Feststoffen oder - bei höheren Ansprüchen an die Klarheit der Lösung - über ein Filter vorgenommen.

Die hergestellten Kaliumsilikatlösungen wurden bezüglich ihres $SiO_2$- und $K_2O$-Gehaltes analysiert.

Als Reaktionsbedingungen wurden im technischen Maßstab die Bedingungen des Beispiels 1 gewählt. Die Ansatzgröße betrug 22 000 kg. Die erhaltene ca. 40 %ige Kaliwasserglaslösung hatte ein $SiO_2$ : $K_2O$-Molverhältnis von 3,75 : 1 und entsprach praktisch dem Ergebnis des Versuches im Laboratoriumsmaßstab.

In einer besonderen Ausführungsform kann der Hydrothermal-Prozeß unter Einsatz von Cristobalit/KOH-Lösung bei relativ hohen Feststoffkonzentrationen im Reaktor ablaufen, da auch bei hohem $SiO_2$ : $K_2O$-Molverhältnis unter Reaktionsbedingungen (215 °C/20 bar) die Kaliumsilikatlösung einen für den Prozeß ausreichenden Viskositätsbereich aufweist. Nach Abschluß der Reaktion kann dann entweder

- unter Druck direkt in den Reaktor oder
- in die Ausblaseleitung zu einem Vorlagebehälter während der Ausblasevorgangs

zusätzlich Wasser eingespeist werden, so daß die über die Ausblaseleitung in den Vorlagebehälter gelangte Kaliumsilikatlösung in der Weise ausreichend verdünnt wird, daß in der Vorlage bei Temperaturen von ca. 100 °C die Kaliumsilikatlösung vor der weiteren Aufarbeitung durch Sedimentation oder Filtration eine fließfähige, ausreichend niedrigviskose Konsistenz aufweist.

Diese Verfahrensmodifikation hat den besonderen Vorteil, daß bei hoher Feststoffkonzentration während der Hydrothermal-Reaktion im Reaktor die Raum-/Zeitausbeute (kg Feststoff/m$^3$ Reaktorvolumen) außerordentlich hoch ist, die Verdünnung des erhaltenen Reaktionsproduktes außerhalb des Reaktors auf dem Wege zum Ausblasebehälter erfolgt.

Beispiel 1

Beispiel 1 belegt einen in Hinblick auf die relativ niedrige Ansatzlaugenkonzentration günstigen Ansatz bei stöchiometrischem Cristobaliteinsatz, bezogen auf ein zu erzielendes Molverhältnis $SiO_2$ : $K_2O$ in der Kaliumsilikatlösung von 3,96 : 1.

Beispiel 2

Eine erhöhte KOH-Konzentration im Ansatz wurde gegenüber Beispiel 1 bei vergleichbaren Reaktionszeiten eingestellt, um den Einfluß der KOH-Konzentration auf Reaktionsgeschwindigkeit und erzielbares $SiO_2$ : $K_2O$-Molverhältnis zu ermitteln.

Beispiele 3 - 5

Um ein höheres Molverhältnis $SiO_2$ : $K_2O$ in der Reaktionslösung zu erzielen, wurde gegenüber Beispiel 1, bezogen auf das Sollverhältnis von 3,96 : 1, ein steigender Überschuß (+ 5, 10, 16 %) von Cristobalit eingesetzt.

Beispiel 6

Bei einem Cristobalitüberschuß von 16 % wurden die Reaktionszeiten verlängert.

Tabelle

Versuchsbeispiele

| Bsp. Nr. | Einsatzstoffe u. Mengen | | KOH-Konz. (%) | Molverh. im Ansatz $(SiO_2:K_2O)$ | HT-Reaktionsbedingungen | | Kaliumsili- katlösung | | Molverh. i. d. Lösung $SiO_2 : K_2O$ |
|---|---|---|---|---|---|---|---|---|---|
| | Cristobalit (g) | Kalilauge (g) | | | Reakt.zeit (min) | Reakt.temp. (°C) | $SiO_2$ (%) | $K_2O$ (%) | |
| 1 | 30,00 | 70,00 | 20,0 | 3,96 : 1 | 60 | 215 | 28,61 | 11,99 | 3,74 : 1 |
| 2 | 34,88 | 65,12 | 25,0 | 3,96 : 1 | 60 | 215 | 34,07 | 13,85 | 3,86 : 1 |
| 3[*1] | 36,04 | 63,96 | 25,0 | 4,19 : 1 | 60 | 215 | 34,22 | 13,81 | 3,88 : 1 |
| 4[*2] | 37,06 | 62,94 | 25,0 | 4,37 : 1 | 60 | 215 | 34,50 | 13,75 | 3,93 : 1 |
| 5[*3] | 38,37 | 61,62 | 25,0 | 4,63 : 1 | 60 | 215 | 34,65 | 13,72 | 3,96 : 1 |
| 6[*3] | 38,37 | 61,62 | 25,0 | 4,63 : 1 | 120 | 215 | 34,82 | 13,69 | 4,00 : 1 |

*1 Cristobalitüberschuß 5,0 %, bezogen auf ein angestrebtes Molverhältnis $SiO_2 : K_2O$ in der Lösung von 3,96 : 1

*2 Cristobalitüberschuß 10,0 %, bezogen auf ein angestrebtes Molverhältnis $SiO_2 : K_2O$ in der Lösung von 3,96 : 1

*3 Cristobalitüberschuß 16,0 %, bezogen auf ein angestrebtes Molverhältnis $SiO_2 : K_2O$ in der Lösung von 3,96 : 1

(HT steht für "hydrothermal")

Beispiel 7

Um den Einfluß der Temperungstemperatur des Quarzes auf die Produkteigenschaft der hergestellten wäßrigen Kaliumsilikatlösungen nachzuweisen, wurde Quarz unter Zusatz katalytischer Mengen an Alkali bei Temperaturen von 850 °C bis 1600 °C zunächst getempert und daraufhin hydrothermal mit Kaliumhydroxidlösung umgesetzt. Als Vergleich wurde unbehandelter Quarz in dem gleichen Standardversuch der hydrothermalen Umsetzung mit Kaliumhydroxidlösung zu Kaliwasserglas umgesetzt.

Bei dem Standardversuch der hydrothermalen Umsetzung des getemperten Quarzes mit Kaliumhydroxidlösung wurden als Versuchsbedingungen gewählt:

| | |
|---|---|
| Reaktionstemperatur | 215 °C; |
| Reaktionszeit | 30 min; |
| Kaliumhydroxid-Konzentration | 25 Gew.-%; |
| Überschuß an Siliciumdioxid | 5 % (bezogen auf das Molverhältnis von 3,98 : 1 bei Kaliglas) |

Die Umsetzung dieses getemperten Quarzes in Kalilauge zu einem Kaliwasserglas wurde mit nachstehend aufgelisteten Mengen der Ausgangsstoffe durchgeführt und führte zu den nachstehend tabellarisch wiedergegebenen Umsätzen und Molverhältnissen.

Umsetzung von getempertem Sand in Kalilauge zu K-Glas, Molverhältnis $SiO_2/K_2O$ = 3,98 : 1

| für K-Glas | Mengen |
|---|---|
| 36,02 % getemperter Sand | 49,00 g |
| 31,99 % KOH, 50 %ig | 43,53 g |
| 31,99 % Wasser | 43,53 g |

| | % Umsatz | % $SiO_2$ | % $K_2O$ | Gew.-Verh. | Mol-Verh. |
|---|---|---|---|---|---|
| Theor. Mengen | | 35,84 | 13,44 | 2,67:1 | 4,18:1 |
| unbeh. Sand (Vgl.) | 25,10 | 12,32 | 18,40 | 0,67:1 | 1,05:1 |
| 850 °C Sand | 18,10 | 9,20 | 19,06 | 0,48:1 | 0,76:1 |
| 850 °C Sand* | 25,33 | 12,42 | 18,38 | 0,68:1 | 1,06:1 |
| 950 °C Sand | 18,10 | 9,20 | 19,06 | 0,48:1 | 0,76:1 |
| 950 °C Sand* | 24,60 | 12,10 | 18,45 | 0,66:1 | 1,03:1 |
| 1100 °C Sand* | 52,91 | 22,83 | 16,18 | 1,41:1 | 2,21:1 |
| 1300 °C Sand* | 67,57 | 27,42 | 15,21 | 1,80:1 | 2,83:1 |
| 1600 °C Sand* | 89,51 | 33,34 | 13,96 | 2,39:1 | 3,74:1 |
| Cristobalit | 89,57 | 33,35 | 13,96 | 2,39:1 | 3,75:1 |

(* = unter Zusatz katalytischer Mengen an Alkali)

Die Ergebnisse zeigen, daß ein bei Temperaturen von über 1100 °C getemperter Quarz, insbesondere ein Quarz, der bei Temperaturen von 1300 °C und höher getempert worden ist, in überraschender Weise zu einem höheren Umsatz der kristallinen $SiO_2$-Komponente und somit zu einem höheren Molverhältnis der Kaliumsilikatlösung führt, als der entsprechende unbehandelte Sand.

Beispiel 8

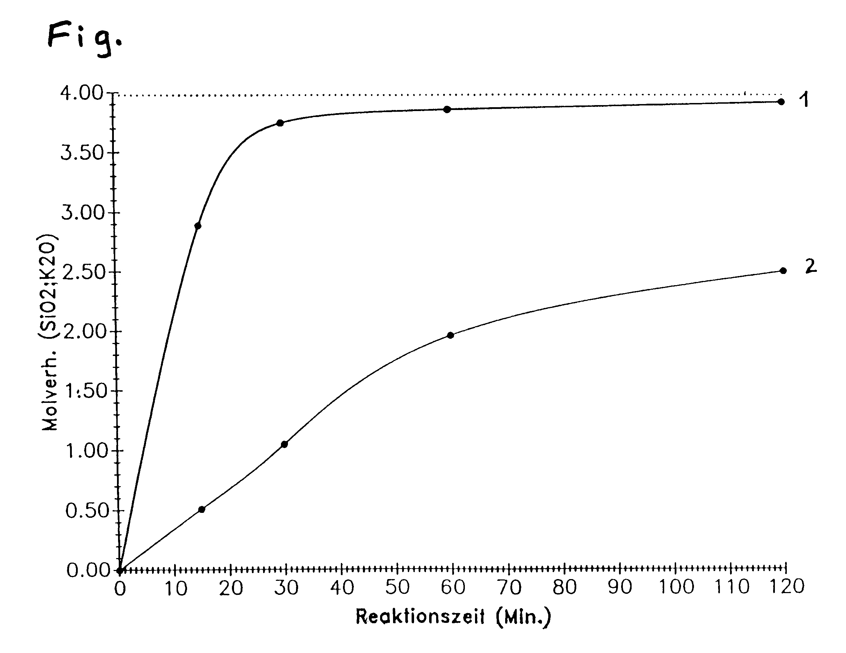

Der Effekt der schnelleren Umsetzung von bei hohen Temperaturen getempertem Quarz, dem Cristobalit, im Vergleich zu einem ungetemperten Quarz, ist in der Figur dokumentiert. Diese Figur zeigt das Ergebnis der Umsetzung von getempertem Quarz, d.h. Cristobalit, zusammen mit 25 Gew.-%iger Kaliumhydroxidlösung bei einem 5 %igen Siliciumdioxidüberschuß, bezogen auf ein Molverhältnis von 3,98 : 1, in einem Druckbehälter bei 215 °C und bei Reaktionszeiten von 15, 30, 60 und 120 min. Es wurde hierbei jeweils das Molverhältnis Siliciumdioxid : Kaliumoxid ermittelt. Dieser Kurvenverlauf trägt die Bezugsziffer 1.

Zum Vergleich wurde ein thermisch nicht behandelter Quarz, also ein Sand, unter den oben beschriebenen Reaktionsbedingungen umgesetzt und wiederum nach den oben beschriebenen Reaktionszeiten Proben entnommen, um das Molverhältnis zu bestimmen. Diese Kurve ist mit der Bezugsziffer 2 versehen.

Aus der Figur ergibt sich klar, daß bei dem erfindungsgemäßen Herstellungsverfahren, bei dem ein getemperter Quarz eingesetzt wird, bereits nach 15 min eine Umsetzung von über 70 % erfolgt ist und die Umsetzung schon nach 60 min Reaktionszeit quasi quantitativ ist.

Bei der Vergleichskurve gemäß Bezugsziffer 2 hingegen ergibt sich nach 15 min erst eine Umsetzung von ca. 20 %, und selbst nach einer Reaktionszeit von 120 min erreicht man maximal einen Umsetzungsgrad von weniger als 70 %. Es sei hier nochmals darauf verwiesen, daß gemäß der einschlägigen Literatur bei der hydrothermalen Umsetzung von Sand (Quarz) mit Kalilauge nur Reaktionsprodukte mit einem maximalen Molverhältnis $SiO_2/K_2O$ von 2,75 : 1 resultierten bzw. diese Umsetzung in technischem Maßstab nicht möglich ist.

Dies zeigt treffend die durch das Tempern des Quarzsandes bei hoher Temperatur hervorgerufenen Vorteile des erfindungsgemäßen Herstellungsverfahrens.

## Patentansprüche

1. Verfahren zur hydrothermalen Herstellung von Kaliumsilikatlösungen mit hohem $SiO_2$ : $K_2O$-Molverhältnis durch Umsetzung eines kristallinen Siliciumdioxids mit wäßriger Kaliumhydroxidlösung, dadurch gekennzeichnet,
   daß man als kristallines Siliciumdioxid einen bei Temperaturen im Bereich von über 1100 °C bis zum Schmelzpunkt getemperten Quarz einsetzt und
   diesen getemperten Quarz mit wäßriger Kaliumhydroxidlösung in einem Konzentrationsbereich von 10 bis 40 Gew.-% bei Temperaturen von 150 bis 300 °C und den diesen Temperaturen entsprechenden Drücken von gesättigtem Wasserdampf in einem geschlossenen Druckreaktor umsetzt.

2. Verfahren nach Anspruch 1, dadurch gekennzeichnet, daß die erhaltene Kaliumsilikatlösung ein $SiO_2$ : $K_2O$-Molverhältnis von mehr als 2,75 bis 4,2 : 1, vorzugsweise 2,8 bis 4,2 : 1, besonders bevorzugt 3,1 bis 4,0 : 1 aufweist.

3. Verfahren nach Ansprüchen 1 oder 2, dadurch gekennzeichnet, daß man als kristallines Siliciumdioxid einen bei Temperaturen von 1200 bis 1700 °C unter Zusatz katalytischer Mengen an Alkali getemperten Quarz einsetzt, welcher sich unter diesen Bedingungen im wesentlichen in Cristobalit umwandelt, und daß man den so getemperten Quarz mit wäßriger Kaliumhydroxidlösung in einem Konzentrationsbereich von 15 bis 30 Gew.-%, vorzugsweise 15 bis 25 Gew.-%, bei Temperaturen von 200 bis 230 °C und den diesen Temperaturen entsprechenden Drücken von gesättigtem Wasserdampf in einem geschlossenen Druckreaktor umsetzt.

4. Verfahren nach einem der Ansprüche 1 bis 3, dadurch gekennzeichnet, daß man als kristallines Siliciumdioxid einen bei Temperaturen im Bereich von 1300 bis 1600 °C unter Zusatz katalytischer Mengen an Alkali getemperten Quarz einsetzt, welcher sich unter diesen Bedingungen im wesentlichen in Cristobalit umwandelt.

5. Verfahren nach einem der Ansprüche 1 bis 4, dadurch gekennzeichnet, daß man die Umsetzung mit einem Überschuß an getempertem Quarz von bis zu 100 Mol-%, vorzugsweise 2 bis 30 Mol-%, bezogen auf das Soll-$SiO_2$ : $K_2O$-Molverhältnis in der Kaliumsilikatlösung, durchführt.

## Claims

1. A process for the hydrothermal production of potassium silicate solutions having a high $SiO_2$ : $K_2O$ molar ratio by reaction of a crystalline silicon dioxide with agueous potassium hydroxide solution, characterized in that a quartz conditioned at temperatures above 1100 °C to the melting point is used as the crystalline silicon dioxide and this conditioned quartz is reacted with aqueous potassium hydroxide solution in a concentration range of 10 to 40% by weight, the reaction being carried out in a closed pressure reactor at temperatures of 150 to 300 °C and under saturated steam pressures corresponding to those temperatures.

2. A process as claimed in claim 1, characterized in that the potassium silicate solution obtained has an $SiO_2 : K_2O$ molar ratio of more than 2.75 to 4.2 : 1, preferably 2.8 to 4.2 : 1 and more preferably 3.1 to 4.0 : 1.

3. A process as claimed in claim 1 or 2, characterized in that a quartz conditioned at temperatures of 1200 to 1700°C in the presence of catalytic quantities of alkali, changing largely into cristobalite under those conditions, is used as the crystalline silicon dioxide and the quartz thus conditioned is reacted with aqueous potassium hydroxide solution in a concentration range of 15 to 30% by weight and preferably 15 to 25% by weight, the reaction being carried out in a closed pressure reactor at temperatures in the range from 200 to 230°C under saturated steam pressures corresponding to those temperatures.

4. A process as claimed in any of claims 1 to 3, characterized in that quartz conditioned at temperatures in the range from 1300 to 1600°C in the presence of catalytic quantities of alkali, changing largely into cristobalite under those conditions, is used as the crystalline silicon dioxide.

5. A process as claimed in any of claims 1 to 4, characterized in that the reaction is carried out with an excess of conditioned quartz of up to 100 mol-% and preferably from 2 to 30 mol-%, based on the set $SiO_2 : K_2O$ molar ratio in the potassium silicate solution.

**Revendications**

1. Procédé d'obtention par voie hydrothermale de solutions de silicate de potassium ayant un rapport molaire $SiO_2/K_2O$ élevé par réaction d'un dioxyde de silicium cristallin avec une solution aqueuse d'hydroxyde de potassium, caractérisé en ce que l'on met en oeuvre comme dioxyde de silicium cristallin un quartz recuit à des températures dans la plage de plus de 1 100°C jusqu'au point de fusion et que l'on fait réagir ce quartz recuit avec une solution aqueuse d'hydroxyde de potassium dans une zone de concentrations allant de 10 à 40 % en poids à des températures allant de 150 à 300°C et aux pressions de vapeur d'eau saturée correspondant à ces températures dans un réacteur sous pression hermétique.

2. Procédé selon la revendication 1, caractérisé en ce que la solution de silicate de potassium obtenue possède un rapport molaire $SiO_2/K_2O$ de plus de 2,75 à 4,2 : 1 de préférence de 2,8 à 4,2 : 1, particulièrement préféré de 3,1 à 4,0 : 1.

3. Procédé selon les revendications 1 ou 2, caractérisé en ce que l'on met en oeuvre comme dioxyde de silicium cristallin, un quartz recuit à des températures allant de 1 200 à 1 700°C tout en ajoutant des quantités catalytiques d'alcali quartz qui se transforme dans ces conditions essentiellement en cristobalite, et en ce que l'on met à réagir le quartz ainsi recuit avec une solution aqueuse d'hydroxyde de potassium dans une zone de concentrations allant de 15 à 30 % en poids, de préférence de 15 à 25 % en poids, à des températures allant de 200 à 230°C, et à des pressions de vapeur d'eau saturée correspondant à ces températures dans un réacteur à pression hermétique.

4. Procédé selon l'une des revendications 1 à 3, caractérisé en ce que l'on met en oeuvre comme dioxyde de silicium cristallin un quartz recuit à des températures dans la plage de 1 300 à 1 600°C en ajoutant des quantités catalytiques d'alcali quartz, qui se transforme dans ces conditions essentiellement en cristobalite.

5. Procédé selon l'une des revendications 1 à 4, caractérisé en ce que l'on effectue la réaction avec un excès de quartz recuit allant jusqu'à 100 % molaire, de préférence de 2 à 30 % molaire, rapporté au rapport molaire $SiO_2/K_2O$ théorique dans la solution de silicate de potassium.

Fig. 1